# EUROPÄISCHE PATENTSCHRIFT

(11) **EP 3 362 691 B1**
(45) Veröffentlichungstag und Bekanntmachung des Hinweises auf die Patenterteilung: **09.06.2021**
(21) Anmeldenummer: 16778681.3
(22) Anmeldetag: 29.09.2016
(51) Int. Cl.: F15B 21/00, F16L 55/053

(54) **DÄMPFUNGSVORRICHTUNG**
DAMPING DEVICE
DISPOSITIF D'AMORTISSEMENT

(30) Priorität: 12.10.2015 DE 102015013281
(43) Veröffentlichungstag der Anmeldung: 22.08.2018
(73) Patentinhaber: Hydac Technology GmbH, 66280 Sulzbach/Saar (DE)
(72) Erfinder: KLOFT, Peter, 56235 Ransbach-Baumbach (DE); BALTES, Herbert, 66679 Losheim (DE); BEHR, Robert Marinus, 28844 Weyhe (DE); WAITSCHAT, Arne, 21129 Hamburg (DE); THIELECKE, Frank, 21614 Buxtehude (DE)
(74) Vertreter: Bartels, Martin Erich Arthur
(86) Internationale Anmeldenummer: PCT/EP2016/001620
(87) Internationale Veröffentlichungsnummer: WO 2017/063729

(56) Entgegenhaltungen:
- EP-A2- 1 944 538
- DE-U1-202014 006 687
- GB-A- 1 562 709
- US-A- 4 552 182
- US-A- 5 070 983
- US-B1- 6 745 886

## Beschreibung

Die Erfindung betrifft eine Dämpfungsvorrichtung mit den Merkmalen des Oberbegriffs von Patentanspruch 1.

Dämpfungsvorrichtungen, insbesondere zum Dämpfen oder Vermeiden von Druckstößen, wie Pulsationen, in hydraulischen Versorgungskreisläufen, sind Stand der Technik. Solche Hydrodämpfer, auch Schalldämpfer oder Silencer genannt, dienen der Minderung von Schwingungen, die durch Druckpulsationen erzeugt sind, die einem betreffenden Hydrosystem periodisch aufgeprägt werden, insbesondere durch den Betrieb von Hydropumpen. Wie in dem Dokument DE 102 17 080 C1 aufgezeigt ist, weisen die bekannten Dämpfungsvorrichtungen ein Dämpfungsgehäuse in Form eines Kreiszylinders auf, der an beiden axialen Endbereichen kugelförmig abgerundet ist, wobei sich Fluideinlass und Fluidauslass koaxial zur Zylinderachse an je einem Endbereich befinden. Als Dämpfungsraum, den der Fluidstrom von Fluideinlass zu Fluidauslass durchquert, ist bei diesen Dämpfungsvorrichtungen ein Dämpfungsrohr vorgesehen, das sich zwischen Fluideinlass und Fluid-auslass koaxial erstreckt und in der Rohrwand Öffnungen zum das Rohr umgebenden Fluidraum aufweist. Entsprechend dem Zylinderdurchmesser ist der Fluidraum gegenüber der durch das Dämpfungsrohr vorgegebenen, axialen Durchströmungsrichtung radial erweitert.

US 5,070,983 A offenbart eine gattungsgemäße Dämpfungsvorrichtung, insbesondere zum Dämpfen oder Vermeiden von Druckstößen, wie Pulsationen, in hydraulischen Versorgungskreisläufen, vorzugsweise in Form eines Silencers, mit einem als Dämpfungsraum wirkenden Fluidaufnahmeraum, der von einem Dämpfungsgehäuse umgeben ist, das mindestens einen Fluideinlass und mindestens einen Fluidauslass sowie den zwischen Fluidein- und Fluidauslass sich erstreckenden Fluidaufnahmeraum aufweist, wobei im Betrieb der Vorrichtung ein Fluidstrom in einer Durchströmungsrichtung vom Fluideinlass kommend in Richtung des Fluidauslasses den Fluidaufnahmeraum durchquert, wobei sich zumindest Teile des Fluidaufnahmeraums in mindestens einer Ausdehnungsrichtung quer zur Durchströmungsrichtung erstrecken, wobei der Fluidaufnahmeraum unmittelbar an den Fluideinlass und an den Fluidauslass angrenzt und durch zumindest ein nachgiebiges Wandteil begrenzt ist, und wobei das Dämpfungsgehäuse mehrteilig ausgebildet ist mit einem Bodenteil, das den Fluidein- und Fluidauslass aufweist, und mit einem flanschartig ausgebildeten Deckelteil.

Weitere Dämpfungsvorrichtungen sind aus EP 1 944 538 A2, DE 20 2014 006 687 U1, US 4,552,182 A, GB 1 562 709 A und US 6,745,886 B1 bekannt.

Ausgehend von diesem Stand der Technik stellt sich die Erfindung die Aufgabe, eine Dämpfungsvorrichtung der betrachteten Art zur Verfügung zu stellen, die sich bei einfacher Bauweise durch ein besonders effektives Dämpfungsverhalten auszeichnet.

Erfindungsgemäß ist diese Aufgabe durch eine Dämpfungsvorrichtung gelöst, die die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass das Bodenteil topfartig ausgebildet ist und eine scheibenartige Mittenausnehmung aufweist, deren Scheibenfläche eine Begrenzungswand des als scheibenartiger Hohlraum ausgebildeten Fluidaufnahmeraums bildet, dass das Deckelteil einen Eingriffsstutzen aufweist, der beim am Bodenteil festgelegten Deckelteil bündig in die Mittenausnehmung des Bodenteils eingreift, und dass die Membran den den Fluidaufnahmeraum bildenden Hohlraum an der der Begrenzungswand gegenüberliegenden Seite begrenzt.

Eine besonders hohe Effizienz der Dämpfungswirkung ist bei der erfindungsgemäßen Dämpfungsvorrichtung dadurch erreicht, dass der Fluidaufnahmeraum einen scheibenartig ausgebildeten Hohlraum innerhalb des Dämpfungsgehäuses ausbildet. Die Scheibenform kann hierbei zylindrisch oder als Vieleck ausgebildet sein oder jede andere von der Kreisform abweichende Gestalt besitzen.

Bei der durch Wegfall des Dämpfungsrohres vereinfachten Bauweise bildet eine einzige Kavität ein aus Dämpfungsraum und Fluidraum gemeinsam gebildetes Resonatorsystem. Dadurch, dass der Fluidaufnahmeraum durch mindestens ein als Membran ausgebildetes nachgiebiges Wandteil begrenzt ist, zeichnet sich die erfindungsgemäße Vorrichtung nicht nur durch eine vereinfachte Bauweise, sondern auch durch eine auf ihr Flüssigkeitsvolumen und ihr Gewicht bezogene erhöhte Effizienz aus, wobei die Dämpfungswirkung insbesondere im unteren Frequenzbereich gesteigert ist. Im Vergleich zu bekannten Silencern, bei denen es zu einer Verstärkung von Pulsationen zwischen Pumpe und Eingang des Silencers kommen kann, ist bei der Erfindung auch diese Gefahr wesentlich verringert.

Vorteilhafte Ausgestaltungen der Erfindung sind Gegenstand der Unteransprüche.

Mit besonderem Vorteil kann die Membran den scheibenartigen Hohlraum überspannen und den Fluidaufnahmeraum im Dämpfungsgehäuse von einem Ausdehnungsraum separieren. Dieser stellt einen Freiraum zur Verfügung, der der Membran eine Nachgiebigkeit ermöglicht.

Mit besonderem Vorteil kann die Anordnung so getroffen sein, dass im Ausdehnungsraum eine Abstützung für die Membran vorgesehen ist. Über die Stärke der Abstützung kann die Steifigkeit der Membran und damit deren Dämpfungsverhalten eingestellt werden. Alternativ können die Dicke der Membran und/oder deren Materialeigenschaften auch so gewählt sein, dass auch ohne Abstützung eine genügend hohe Flexibilität und Elastizität gewährleistet sind.

Mit besonderem Vorteil kann im Ausdehnungsraum eine Federanordnung als Abstützung der Membran vorgesehen sein. Anstelle oder zusätzlich zur Federanordnung kann im Ausdehnungsraum auch ein Gaspolster zur Abstützung der Membran vorgesehen sein.

Bei besonders vorteilhaften Ausführungsbeispielen ist die Anordnung so getroffen, dass zur Abstützung der Membran eine Kopplung des Ausdehnungsraums mit der Fluidseite der Dämpfungsvorrichtung vorgesehen ist. Diese Kopplung kann durch eine Fluidverbindung zwischen Fluidaufnahmeraum und Ausdehnungsraum gebildet sein.

Bei Ausführungsbeispielen kann in vorteilhafter Weise für eine die Membran abstützende Federanordnung im Deckelteil eine Halterung für eine Druckfeder gebildet sein, deren freies Ende an der den Fluidaufnahmeraum und den Ausdehnungsraum überspannenden Membran anliegt.

Für eine druckfeste Ausbildung des Dämpfungsgehäuses kann das Deckelteil, diametral zu seiner Hochachse gegenüberliegend, mehrere Durchgriffsbohrungen aufweisen, die von Festlegeschrauben durchgriffen das Deckelteil am Bodenteil festlegen.

Vorzugsweise sind die Festlegeschrauben unter Freilassen des Bereichs von Fluidein- und -auslass gleichmäßig entlang eines Außenumfangs am Dämpfungsgehäuse angeordnet, der den scheibenartigen Fluidaufnahmeraum umfasst.

Für die Verbindung mit einem betreffenden Hydrosystem kann am Fluideinlass und/oder am Fluidauslass am Dämpfungsgehäuse eine Aufnahme für einen Dichtring vorgesehen sein, der den Fluideinlass und/oder Fluidauslass umfasst. An Drittbauteilen lässt sich das Dämpfungsgehäuse in der Art eines Festlegeblocks mittels mehrerer Festlegebolzen, die den Bereich des Fluidein- und/oder Fluidauslasses umgeben, festlegen.

Nachstehend ist die Erfindung anhand eines in der Zeichnung dargestellten Ausführungsbeispiels im Einzelnen erläutert.

Es zeigen:
- Fig. 1: eine stark schematisch vereinfache, skizzenhafte Prinzipdarstellung der Erfindung;
- Fig. 2: eine gegenüber einer praktischen Ausführungsform etwa im Maßstab 1 : 3 verkleinert gezeichnete perspektivische Schrägansicht eines Ausführungsbeispiels der erfindungsgemäßen Dämpfungsvorrichtung;
- Fig. 3: einen gegenüber einer praktischen Ausführungsform geringfügig verkleinert gezeichneten Längsschnitt des Ausführungsbeispiels;
- Fig. 4: eine im Maßstab von Fig. 3 und teilweise aufgeschnitten gezeichnete Draufsicht des Bodenteils des Dämpfungsgehäuses des Ausführungsbeispiels;
- Fig. 5: eine Schnittdarstellung entsprechend der Schnittlinie V - V von Fig. 4;
- Fig. 6: eine Teilansicht lediglich des den Fluidauslass aufweisenden Anschlussbereichs des Dämpfungsgehäuses des Ausführungsbeispiels;
- Fig. 7: eine der Fig. 6 entsprechende Teilansicht des den Fluideingang aufweisenden Anschlussbereichs;
- Fig. 8: einen gegenüber Fig. 3 bis 5 in größerem Maßstab gezeichneten Längsschnitt lediglich des Deckelteils des Dämpfungsgehäuses; und
- Fig. 9: eine demgegenüber in kleinerem Maßstab gezeichnete perspektivische Schrägansicht des Deckelteils, gesehen auf die einen Eingriffsstutzen bildende Innenseite.

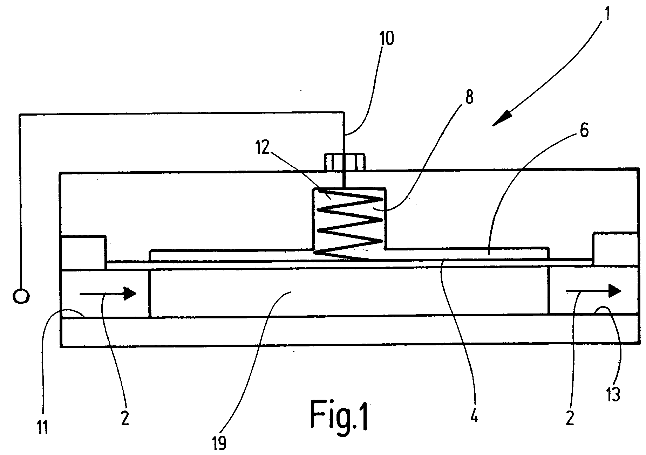

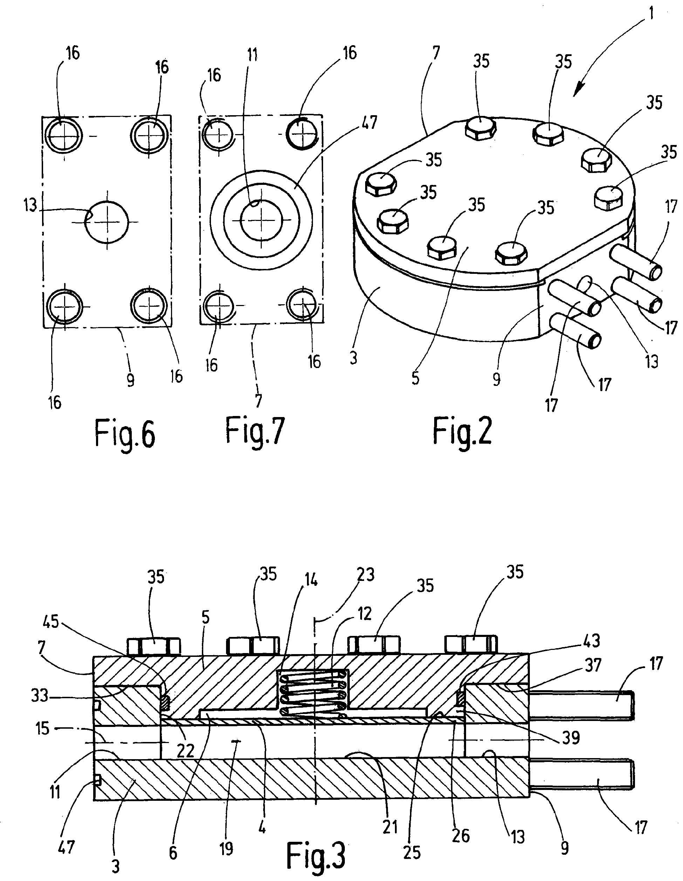

In Fig. 1 ist in stark schematisch vereinfachter Darstellung ein als Ganzes mit 1 bezeichnetes Dämpfungsgehäuse dargestellt, das einen Fluidaufnahmeraum 19 enthält, der von einem mit 11 bezeichneten Fluideinlass her, der unmittelbar an den Fluidaufnahmeraum 19 angrenzt, zu einem Fluidauslass 13 hin durchströmbar ist, wobei die Durchströmungsrichtung mit Strömungspfeilen 2 angedeutet ist. Eine der sich von Fluideinlass 11 zu Fluidauslass 13 erstreckenden Begrenzungswände des Fluidaufnahmeraums 19 ist durch eine Membran 4 gebildet, die den Fluidaufnahmeraum 19 von einem Ausdehnungsraum 6 trennt. Auf der dem Aufnahmeraum 6 zugewandten Seite ist die Membran 4 beim gezeigten Beispiel durch eine Federanordnung 8 abgestützt. Außerdem ist zur Erzeugung eines im Ausdehnungsraum 6 gebildeten Druckpolsters für die Membran eine Druckleitung 10 vorgesehen, über die der Ausdehnungsraum 6 mit dem eingangsseitigen Fluiddruck der Dämpfungsvorrichtung oder anderweitig mit einem Druckpolster, beispielsweise einem Gaspolster, versorgbar ist. Für den Erhalt des Fluiddruckes im Ausdehnungsraum 6 ist die Druckleitung 10 als Verbindungsleitung an die Leitung (nicht dargestellt) angeschlossen, die den Fluideinlass 11 versorgt. In seinen näheren Einzelheiten ist ein Ausführungsbeispiel der erfindungsgemäßen Dämpfungsvorrichtung in den weiteren Fig. 2 bis 9 gezeigt.

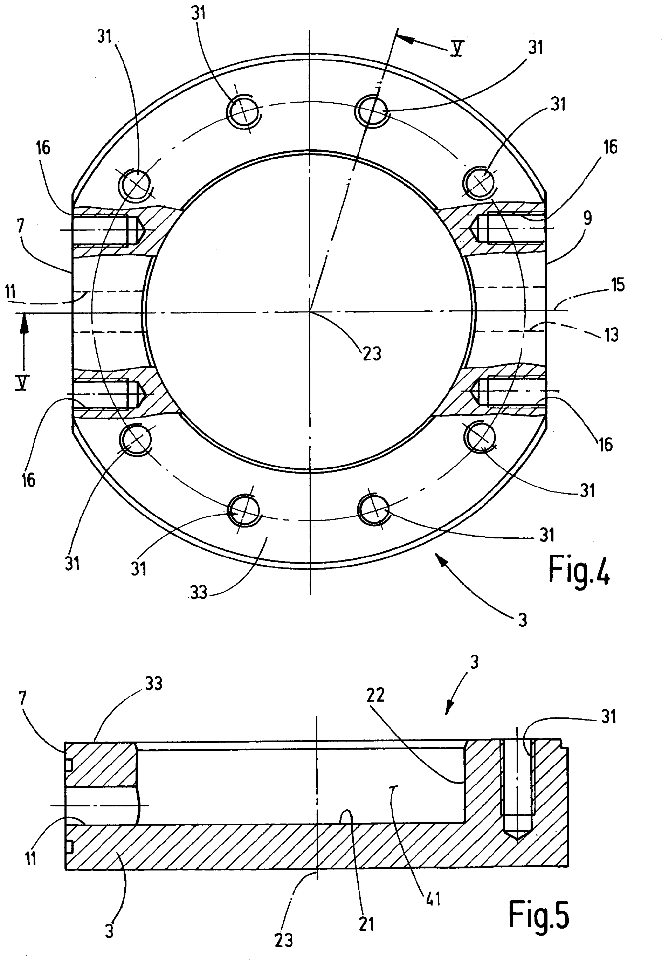

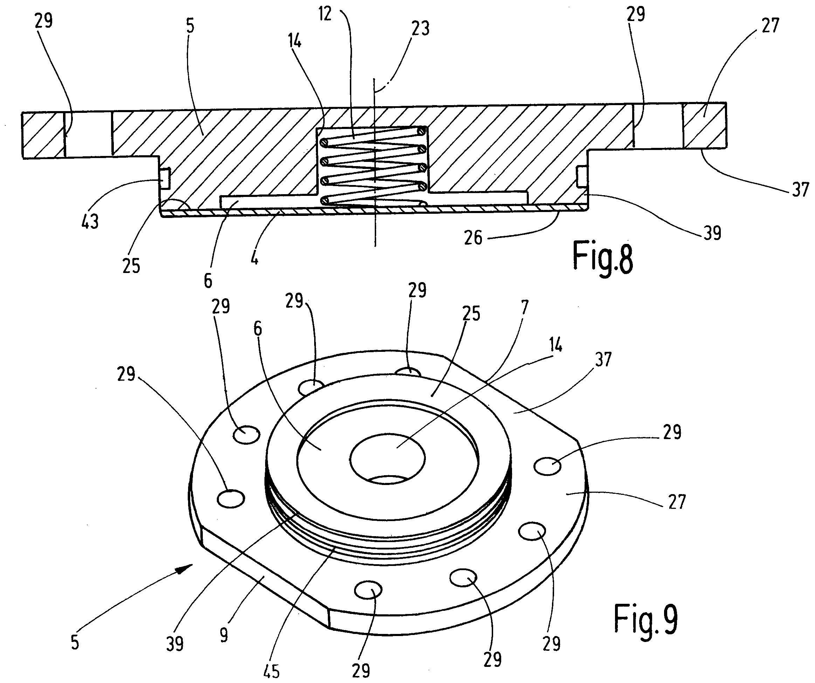

Von diesen zeigen die Fig. 2 und 3 das Ausführungsbeispiel der Dämpfungsvorrichtung in zusammengebautem Zustand. Das in diesen Figuren geschlossen dargestellte Dämpfungsgehäuse 1 besteht aus zwei Hauptteilen, nämlich einem Bodenteil 3, das in den Fig. 4 und 5 gesondert dargestellt ist, sowie einem Deckelteil 5, das in den Fig. 8 und 9 gesondert gezeigt ist. Bodenteil 3 und Deckelteil 5 haben jeweils den gleichen Umriss, so dass sie in zusammengebautem Zustand (Fig.2) umfänglich miteinander bündig sind, wobei der Umriss einer Kreislinie entspricht, die jedoch an zwei diametral zueinander gegenüberliegenden Seiten eine ebenflächige Abflachung 7 bzw. 9 aufweist. In dem dem Bodenteil 3 zugehörigen Teil der Abflachung 7 befindet sich der Fluideinlass 11 des Dämpfungsgehäuses 1 und in dem den Bodenteil 3 zugehörigen Teil der Abflachung 9 befindet sich der Fluidauslass 13, wobei Einlass 11 und Auslass 13 mit der in Fig. 4 mit 15 bezeichneten Achse der Durchströmungsrichtung fluchten. An den Abflachungen 7 und 9 befinden sich jeweils vier Gewindebohrungen 16, die in den Eckbereichen der rechteckförmigen Abflachungen 7 und 9 angeordnet sind und die Festlegung des Dämpfungsgehäuses 1 mittels Gewindebolzen 17 ermöglichen.

Innerhalb des Dämpfungsgehäuses 1 ist der sich zwischen Fluideinlass 11 und -auslass 13 erstreckende Fluidaufnahmeraum, der gleichzeitig als Dämpfungsraum wirkt, durch eine Kavität in Form eines scheibenartigen Hohlraums 19 gebildet. Dieser hat die Gestalt einer kreisrunden Scheibe in der Form eines flachen Kreiszylinders, dessen eine Scheibenfläche durch eine ebene Wand 21 begrenzt ist, die in dem Bodenteil 3, das durch eine zentrale, vertiefte Mittenausnehmung 41 topfartig ausgebildet ist, dessen innere Bodenfläche bildet. Wie am deutlichsten aus Fig. 5 zu ersehen ist, begrenzt das Bodenteil 3 mit der inneren Seitenwand 22 des Topfes den auf die Zentralachse 23 bezogenen Kreisdurchmesser des kreisscheibenartigen Hohlraums 19. Fluideinlass 11 und Fluidauslass 13 sind jeweils durch Bohrungen in den Abflachungen 7 bzw. 9 gebildet, die in den Hohlraum 19 bündig mit der den inneren Topfboden bildenden Begrenzungswand 21 einmünden.

In dem zusammengebauten Zustand, wie er in Fig. 3 dargestellt ist, wo das Deckelteil 5 mit einem kreiszylindrischen Eingriffsstutzen 39 in die Mittenausnehmung 41 im Bodenteil 3 eingreift, bildet die Membran 4 das Wandteil, das den den Fluidhohlraum bilden Hohlraum 19 an der Oberseite, d.h. auf der der Wand 21 gegenüberliegenden Seite begrenzt. Dabei liegt die Membran 4 an einer umfänglichen Kreisringfläche 25 an, die die innere Endfläche des Deckelteils 5 bildet. Diese Kreisringfläche 25 umgibt den Ausdehnungsraum 6, der die Form einer zur Zentralachse 23 konzentrischen Vertiefung im Deckelteil 5 besitzt. Eine innerhalb des Ausdehnungsraums 6 befindliche weitere Vertiefung 14, die ebenfalls zur Zentralachse 23 konzentrisch ist und einen geringeren Durchmesser besitzt als der Ausdehnungsraum 6 und sich bis in die Nähe der Oberseite des Deckelteils 5 erstreckt, bildet ein Gehäuse für eine Schraubendruckfeder 12 der die Membran 14 abstützenden Federanordnung.

Bei aus einem metallischen Werkstoff bestehender Membran 4 ist diese vorzugsweise mittels einer Schweißverbindung mit ihrem Umfangsrand 26 an der Kreisringfläche 25 des Deckelteils 5 festgelegt. Dies kann durch ein von der Außenseite der Membran 4 her durchgeführtes Durchschweißen mittels eines Elektronenstrahlschweißverfahrens (Laserschweißen) durchgeführt sein. Bei aus einem Elastomer bestehender Membran 4 kann auch eine Klebeverbindung mit der Kreisringfläche 25 vorgesehen sein. Bei dem zusammengebauten Zustand, s. Fig. 3, erstreckt sich die Membran 4 als obere Begrenzungswand des Hohlraums 19, ebenso wie die die untere Begrenzung bildende Wand 21, bündig mit dem jeweils angrenzenden Fluideinlass 11 und Fluidauslass 13. Bei einer nicht näher dargestellten Ausführungsform kann die Membran zu ihrer Fixierung im Gehäuse auch randseitig eingespannt sein.

Wenn Fluideinlass 11 und -auslass 13 bei einem praktischen Ausführungsbeispiel etwa durch je eine Bohrung von 12 mm Durchmesser gebildet sind, hat der scheibenförmige Hohlraum 19 eine Tiefe von 12 mm. Bei einem derartigen Ausführungsbeispiel kann der Innendurchmesser des Hohlraums 19 im Bereich von 100 mm liegen, bei einem Außendurchmesser des Dämpfungsgehäuses 1, außerhalb der Abflachungen 7, 9, von beispielsweise 160 mm.

Wie die Fig. 8 und 9 zeigen, weist das Deckelteil 5 einen Flanschteil 27 mit Befestigungslöchern 29 auf. Das Flanschteil 27 hat den gleichen Umriss wie das Bodenteil 3, ist also kreisrund, abgesehen von den Abflachungen 7 und 9, so dass sich für die zusammengesetzte Gesamtvorrichtung die absatzfreie Außenform ergibt, wie sie in Fig. 2 dargestellt ist. Die Befestigungslöcher 29 sind, wie Fig. 9 zeigt, auf je einem Teilkreisbogen außerhalb des Bereichs der Abflachungen 7, 9 vorgesehen. In Entsprechung zu den Befestigungsbohrungen 29 sind im Bodenteil 3 Gewindebohrungen 31 vorgesehen, die als Sackbohrungen in der ebenflächigen Oberseite 33 des Bodenteils 3 ausgebildet und für Befestigungsschrauben 35 vorgesehen sind, die die Befestigungslöcher 29 durchgreifen, um das Deckelteil 5 mit seiner Flanschfläche 37 an der Oberseite 33 an der offenen Seite des Topfes des Bodenteils 3 festzulegen.

In dem festgelegten Zustand greift der sich von der Flanschfläche 37 des Deckelteils 5 koaxial erstreckende, kreiszylinderförmige Eingriffsstutzen 39 in die Mittenausnehmung 41 im Bodenteil 3 ein, die von der inneren Seitenwand 22 des Topfes des Bodenteils 3 begrenzt ist. Dieser Eingriff bei verschraubtem Zustand ist in Fig. 3 gezeigt, wobei die Membran 4 die obere Begrenzungswand des Hohlraums 19 bildet. Für die Abdichtung des Hohlraums 19 gegenüber dem Deckelteil 5 ist in einer in die Seitenwand des Eingriffsstutzens 39 eingearbeitete Ringnut 43 ein Dichtring 45 eingesetzt. Wie Fig. 7 zeigt, ist an der dem Fluideinlass 11 zugeordneten Abflachung 7 eine Ringnut 47 für ein an der Anschlussstelle abdichtendes Dichtelement vorgesehen. Es versteht sich, dass in entsprechender Weise an der dem Fluidauslass zugeordneten Abflachung 9 eine entsprechende Dichtungsanordnung vorgesehen sein kann.

Aufgrund der symmetrischen Gehäusebauform lassen sich Ein- und Auslassseite gegebenenfalls mit geänderten Dichtgeometrien auch gegeneinander tauschen. Aufgrund des scheibenförmigen Dämpfungsraums mit einer quer zur eigentlichen Durchflussrichtung erweiternden Kavität ist ein Silencer mit hoher Effizienz erreicht, der bezogen auf sein vorgebbares Flüssigkeitsvolumen ein geringes Gewicht besitzt. Ferner kommt es nur, wenn überhaupt, zu einer geringen Verstärkung zwischen dem Silencer und einer an diesen anschließbaren Hydropumpe.

## Patentansprüche

1. Dämpfungsvorrichtung, insbesondere zum Dämpfen oder Vermeiden von Druckstößen, wie Pulsationen, in hydraulischen Versorgungskreisläufen, vorzugsweise in Form eines Silencers, mit einem als Dämpfungsraum wirkenden Fluidaufnahmeraum (19), der von einem Dämpfungsgehäuse (1) umgeben ist, das mindestens einen Fluideinlass (11) und mindestens einen Fluidauslass (13) sowie den zwischen Fluidein (11)- und Fluidauslass (13) sich erstreckenden Fluidaufnahmeraum (19) aufweist, wobei im Betrieb der Vorrichtung ein Fluidstrom in einer Durchströmungsrichtung (2, 15) vom Fluideinlass (11) kommend in Richtung des Fluidauslasses (13) den Dämpfungsraum (19) durchquert, wobei sich zumindest Teile des Fluidaufnahmeraums (19) in mindestens einer Ausdehnungsrichtung quer zur Durchströmungsrichtung (2, 15) erstrecken, wobei der Fluidaufnahmeraum (19) unmittelbar an den Fluideinlass (11) und an den Fluidauslass (13) angrenzt und durch zumindest ein als Membran ausgebildetes nachgiebiges Wandteil (4) begrenzt ist, und wobei das Dämpfungsgehäuse (1) mehrteilig ausgebildet ist mit einem Bodenteil (3), das den Fluidein (11)- und Fluidauslass (13) aufweist, und mit einem flanschartig ausgebildeten Deckelteil (5), **dadurch gekennzeichnet, dass** das Bodenteil (3) topfartig ausgebildet ist und eine scheibenartige Mittenausnehmung (41) aufweist, deren Scheibenfläche eine Begrenzungswand (21) des als scheibenartiger Hohlraum ausgebildeten Fluidaufnahmeraums (19) bildet, dass das Deckelteil (5) einen Eingriffsstutzen (39) aufweist, der beim am Bodenteil (3) festgelegten Deckelteil (5) bündig in die Mittenausnehmung (41) des Bodenteils (3) eingreift, und dass die Membran (4) den den Fluidaufnahmeraum bildenden Hohlraum (19) an der der Begrenzungswand (21) gegenüberliegenden Seite begrenzt.

2. Dämpfungsvorrichtung nach Anspruch 1, **dadurch gekennzeichnet, dass** die Membran (4) den scheibenartigen Hohlraum (19) überspannt und den Fluidauf-nahmeraum im Dämpfungsgehäuse (1) von einem Ausdehnungsraum (6) separiert.

3. Dämpfungsvorrichtung nach Anspruch 1 oder 2, **dadurch gekennzeichnet, dass** die Membran (4) an einer umfänglichen Kreisringfläche (25) anliegt, die die innere Endfläche des Deckelteils (5) bildet.

4. Dämpfungsvorrichtung nach Anspruch 3, **dadurch gekennzeichnet, dass** die Kreisringfläche (25) den Ausdehnungsraum (6) umgibt, der die Form einer zur Zentralachse (23) konzentrischen Vertiefung im Deckelteil (5) besitzt.

5. Dämpfungsvorrichtung nach einem der Ansprüche 2 bis 4, **dadurch gekennzeichnet, dass** im Ausdehnungsraum (6) eine Abstützung (8; 12) für die Membran (4) vorgesehen ist.

6. Dämpfungsvorrichtung nach einem der vorstehenden Ansprüche 2 bis 5, **dadurch gekennzeichnet, dass** im Ausdehnungsraum (6) eine Federanordnung (8) als Abstützung der Membran (4) vorgesehen ist.

7. Dämpfungsvorrichtung nach einem der vorstehenden Ansprüche 2 bis 6, **dadurch gekennzeichnet, dass** im Ausdehnungsraum (6) ein Druckpolster zur Abstützung der Membran (4) vorgesehen ist.

8. Dämpfungsvorrichtung nach einem der Ansprüche 2 bis 7, **dadurch gekennzeichnet, dass** zur Abstützung der Membran (4) eine Kopplung (10) des Ausdehnungsraumes (6) mit der Fluidseite der Dämpfungsvorrichtung vorgesehen ist.

9. Dämpfungsvorrichtung nach einem der vorstehenden Ansprüche 2 bis 8, **dadurch gekennzeichnet, dass** im Deckelteil (5) eine Halterung (14) für eine Druckfeder (12) gebildet ist, deren freies Ende an der den Fluidaufnahmeraum (19) und den Ausdehnungsraum (6) überspannenden Membran (4) anliegt.

10. Dämpfungsvorrichtung nach einem der vorstehenden Ansprüche, **dadurch gekennzeichnet, dass** das Deckelteil (5), diametral zu seiner Hochachse (23) gegenüberliegend, mehrere Durchgriffsbohrungen (29) aufweist, die von Festlegeschrauben (35) durchgriffen das Deckelteil (5) am Bodenteil (3) festlegen.

11. Dämpfungsvorrichtung nach Anspruch 10, **dadurch gekennzeichnet, dass** die Festlegeschrauben (35) unter Freilassen des Bereichs (7, 9) von Fluidein- (11) und -auslass (13) gleichmäßig entlang eines Außenumfanges am Dämpfungsgehäuse (1) angeordnet sind, der den scheibenartigen Fluidaufnahmeraum (19) umfasst.

12. Dämpfungsvorrichtung nach einem der vorstehenden Ansprüche, **dadurch gekennzeichnet, dass** am Fluideinlass (11) und/oder am Fluidauslass (13) im Dämpfungsgehäuse (1) eine Aufnahme (47) für einen Dichtring vorgesehen ist, der den Fluideinlass (11) und/oder Fluidauslass (13) umfasst.

13. Dämpfungsvorrichtung nach einem der vorstehenden Ansprüche, **dadurch gekennzeichnet, dass** in der Art eines Festlegeblocks mit mehreren Festlegebolzen (17), die den Bereich (7, 9) des Fluidein-(11) und/oder -auslasses (13) umgeben, sich das Dämpfungsgehäuse (1) an Drittbauteilen festlegen lässt.

## Claims

1. Damping device, especially for damping or avoiding pressure surges, such as pulsing, in hydraulic supply systems, preferably in the form of a silencer, with a fluid holding chamber (19) acting as a damping chamber, said fluid holding chamber being surrounded by a damping housing (1), which comprises at least one fluid inlet (11) and at least one fluid outlet (13) and the fluid holding chamber (19) extending between fluid inlet (11) and fluid outlet (13), wherein a fluid flow passes through the damping chamber (19) when the device is in operation in a flow direction (2, 15) coming from the fluid inlet (11) towards the fluid outlet (13), wherein at least portions of the fluid holding chamber (19) extend in at least one expansion direction transversely with respect to the flow direction (2,15), the fluid holding chamber (7) being directly adjacent to the fluid inlet (11) and the fluid outlet (13) and delimited by at least one flexible wall part (4) designed as a membrane, and the damping housing (1) being designed in multiple parts, with a base part (3), which comprises the fluid inlet (11) and fluid outlet (13), and with a lid part (5) designed in the form of a flange, **characterised in that** the base part (3) is designed to be cup-shaped and comprises a disk-shaped recess (41), the disc surface of which forms a boundary wall (21) of the fluid holding chamber which is designed as a disc-shaped cavity, **in that** the lid part (5) comprises an engagement piece (39), which engages flush in the central recess (41) of the base part (3) when the lid part (5) is fixed to the base part (3), and **in that** the membrane (4) delimits the cavity (19) forming the fluid holding chamber on the side opposite the boundary wall (21).

2. Damping device according to claim 1, **characterised in that** the membrane (4) spans the disc-shaped cavity (19) and separates the fluid holding chamber in the damping housing (1) from an expansion chamber (6).

3. Damping device according to either claim 1 or claim 2, **characterised in that** the membrane (4) lies on an extensive circular surface (25), which forms the inner end surface of the lid part (5).

4. Damping device according to claim 3, **characterised in that** the circular surface (25) surrounds the expansion chamber (6), which takes the form of a depression in the lid part (5), said depression being concentric in relation to the central axis (23).

5. Damping device according to any one of claims 2 to 4, **characterised in that** a support (8; 12) is provided for the membrane (4) in the expansion chamber (6).

6. Damping device according to any one of the preceding claims 2 to 5, **characterised in that** a spring arrangement (8) is provided as a support for the membrane (4) in the expansion chamber (6).

7. Damping device according to any one of the preceding claims 2 to 6, **characterised in that** a pressure pad is provided to support the membrane (4) in the expansion chamber (6).

8. Damping device according to any one of claims 2 to 7, **characterised in that** a coupling (10) between the expansion chamber (6) and the fluid side of the damping device is provided to support the membrane (4).

9. Damping device according to any one of the preceding claims 2 to 8, **characterised in that**, in the lid part (5), a holder (14) is formed for a compression spring (12), the free end thereof lying on the membrane (4) spanning the fluid holding chamber (19) and the expansion chamber (6).

10. Damping device according to any one of the preceding claims, **characterised in that** the lid part (5) comprises a plurality of through holes (29), diametrically opposite its vertical axis (23), which fix the lid part (15) to the base part (3) when fixing bolts (35) are passed through.

11. Damping device according to claim 10, **characterised in that** the fixing bolts (35) are evenly arranged along an outer circumference of the damping housing (1), leaving the region (7, 9) of the fluid inlet (11) and the fluid outlet (13) free, said outer circumference surrounding the disc-shaped fluid holding chamber (19).

12. Damping device according to any one of the preceding claims, **characterised in that** a seat (47) for a sealing ring is provided on the fluid inlet (11) and/or on the fluid outlet (13) in the damping housing (1), said sealing ring surrounding the fluid inlet (11) and/or fluid outlet (13).

13. Damping device according to any one of the preceding claims, **characterised in that** the damping housing (1) can be fixed (1) to third-party components in the form of a fixing block with a plurality of fixing bolts (17), which surround the region (7, 9) of the fluid inlet (11) and/or fluid outlet (13).

## Revendications

1. Dispositif d'amortissement, notamment pour amortir ou empêcher des coups de bélier, comme des pulsations, dans des circuits hydrauliques d'alimentation, de préférence sous la forme d'un silencieux, comprenant un espace (19) de réception de fluide servant d'espace d'amortissement, qui est entouré d'un boîtier (1) d'amortissement ayant au moins une entrée (11) de fluide et au moins une sortie (13) de fluide, ainsi qu'un espace (19) de réception de fluide s'étendant entre l'entrée (11) de fluide et la sortie (13) de fluide, dans lequel, lorsque le dispositif fonctionne, un courant fluidique traverse l'espace (19) d'amortissement dans un sens (2, 15) de traversée venant de l'entrée (11) de fluide en direction de la sortie (13) de fluide, dans lequel au moins des parties de l'espace (19) de réception de fluide s'étendent dans au moins une direction d'étendue transversalement à la direction (2, 15) de traversée, dans lequel l'espace (19) de réception de fluide est voisin immédiatement de l'entrée (11) de fluide et de la sortie (13) de fluide et est délimité par au moins une partie (4) de paroi cédant élastiquement constituée en membrane, et dans lequel le boîtier (1) d'amortissement est constitué en plusieurs parties en ayant une partie (3) de fond, qui a l'entrée (11) de fluide et de la sortie (13) de fluide, et une partie de couvercle constituée à la manière d'un flasque, **caractérisé en ce que** la partie (3) de fond est constituée à la manière d'une cuvette et a un évidement (41) médian de type en disque, dont la surface de disque forme une paroi (21) de délimitation de l'espace (19) de réception de fluide constitué en cavité de type en disque, **en ce que** la partie (5) de couvercle a une tubulure (39) de pénétration qui, lorsque la partie (5) de couvercle est fixée à la partie (3) de fond, pénètre avec un affleurement dans l'évidement (41) médian de la partie (3) de fond et **en ce que** la membrane délimite du côté opposé à la paroi (21) de délimitation la cavité (19) formant l'espace de réception de fluide.

2. Dispositif d'amortissement suivant la revendication 1, **caractérisé en ce que** la membrane (4) recouvre l'espace (19) de type en disque et sépare l'espace de réception de fluide dans le boîtier (1) d'amortissement d'un espace (6) d'expansion.

3. Dispositif d'amortissement suivant la revendication 1 ou 2, **caractérisé en ce que** la membrane (4) s'applique à une surface (25) périphérique en anneau de cercle, qui forme la surface d'extrémité inférieure de la partie (5) de couvercle.

4. Dispositif d'amortissement suivant la revendication 3, **caractérisé en ce que** la surface (25) en anneau de cercle entoure l'espace (6) d'expansion qui a la forme, dans la partie (5) de couvercle, d'une cavité concentrique à l'axe (23) central.

5. Dispositif d'amortissement suivant la revendication 2 ou 4, **caractérisé en ce que** l'appui (8 ; 12) pour la membrane (4) est prévu dans l'espace (6) d'expansion.

6. Dispositif d'amortissement suivant l'une des revendications 2 à 5 précédentes, **caractérisé en ce qu'**un agencement (8) de ressort est prévu comme appui de la membrane (4) dans l'espace (6) d'expansion.

7. Dispositif d'amortissement suivant l'une des revendications 2 à 6 précédentes, **caractérisé en ce qu'**un coussin de pression est prévu pour l'appui de la membrane (4) dans l'espace (6) d'expansion.

8. Dispositif d'amortissement suivant l'une des revendications 2 à 7, **caractérisé en ce qu'**il est prévu pour l'appui de la membrane (4) une communication (10) de l'espace (6) d'expansion avec le côté de fluide du dispositif d'amortissement.

9. Dispositif d'amortissement suivant l'une des revendications 2 à 8 précédentes, **caractérisé en ce qu'**il est formé dans la partie (5) de couvercle un support (14) pour un ressort (12) de compression, dont l'extrémité libre s'applique à la membrane (4) recouvrant l'espace (19) de réception de fluide et l'espace (6) d'expansion.

10. Dispositif d'amortissement suivant l'une des revendications précédentes, **caractérisé en ce que** la partie (5) de couvercle a, en opposition diamétralement par rapport à son axe (23) vertical, plusieurs trous (29) traversants qui, traversés par des vis (35) de fixation, fixent la partie (5) de couvercle à la partie (3) de fond.

11. Dispositif d'amortissement suivant la revendication 10, **caractérisé en ce que** les vis (35) de fixation sont disposées uniformément en laissant libre la partie (7, 9) de l'entrée (11) de fluide et de la sortie (13) de fluide le long d'un pourtour extérieur du boîtier (1) d'amortissement, qui entoure l'espace (19) de réception de fluide de type en disque.

12. Dispositif d'amortissement suivant l'une des revendications précédentes, **caractérisé en ce qu'**il est prévu, à l'entrée (11) de fluide et/ou à la sortie (13) de fluide dans le boîtier (1) d'amortissement, un logement (47) pour une bague d'étanchéité, qui entoure l'entrée (11) de fluide et/ou la sortie (13) de fluide.

13. Dispositif d'amortissement suivant l'une des revendications précédentes, **caractérisé en ce qu'**à la manière d'un bloc de fixation ayant plusieurs boulons (17) de fixation, qui entourent la partie (7, 9) de l'entrée (11) de fluide et/ou de la sortie (13) de fluide, le boîtier (1) d'amortissement peut se fixer à des pièces tierces.
